# EUROPEAN PATENT APPLICATION

(11) **EP 4 818 083 A1**
(43) Date of publication of application: **07.10.2026**
(21) Application number: 25168413.0
(22) Date of filing: 04.04.2025
(51) Int. Cl.: B65G 21/06, B65G 54/02, B65G 21/20

(54) **TRACK SYSTEM FOR A LINEAR MOTOR CONVEYING SYSTEM, LINEAR MOTOR CONVEYING SYSTEM AND CORRESPONDING METHODS**

(71) Applicant: Robert Bosch GmbH, 70442 Stuttgart (DE)
(72) Inventor: van der Woude, Lars, 5644 EA Eindhoven (NL); Tielen, Niels, 4871 LM Etten-Leur (NL); Geelkerken, Nicolaas Gerardus, 2811 CE Reeuwijk (NL); Spruit, Louis, 5502 CA Veldhoven (NL); Peters, Piet, 5731 EN Mierlo (NL)

(57) **Abstract**

The invention relates to track system (505) for a linear motor conveying system, the track system comprising multiple track modules connected to each other, wherein each of the track modules has a conveying path for a carrier module to be received, each of the track modules having two ends and the respective conveying path extending from a first one to a second one of said two ends, wherein each of the track modules comprises guiding structures, preferably rods, each configured to act as a bearing surface for a wheel of the carrier module, wherein, for each of the track modules, the guiding structures are configured with a free hanging (531.1E, 531.1E') end such that, at the first and/or second one of the two ends, the respective free hanging end is not in contact with the track component, wherein the track system further comprises one or multiple connectors, each connector (570) comprising at least two connecting recesses, wherein, for one or each of multiple sets of two adjacent of the multiple track modules, which are arranged next to each other along the conveying path, such that free hanging ends of the respective guiding structures are located next to each other, in an at least essentially coaxial manner, the free hanging ends of the respective guiding structures at the first side part and/or the second side part are connected to each other by means of the one or at least one of the multiple connectors.

## Description

The present invention relates to a track system for a linear motor conveying system, to a linear motor conveying system, to a method for setting up such a track system, and to a method for replacing a track module in such a track system. The linear motor conveying system comprises the track system with multiple track modules and one or more carriers to be guided in the track system.

### Background of the invention

Linear conveying systems like linear motor conveying systems can be used in different applications, e.g., industrial applications. For example, linear motor conveying systems can be used in the field of high-speed conveyance solutions for in-machine and inter-machine transportation. Such solutions can be inverted linear motor systems, which can control small workpiece carriers accurately and with high dynamics. The carriers themselves can be passive.

### Disclosure of the invention

According to the invention a track system, a linear motor conveying system, and corresponding methods with the features of the independent claims are proposed. Advantageous embodiments are subject-matter of dependent claims and of the following description.

The invention relates to linear motor conveying systems and the track system used therein. Such track system comprises multiple track modules, and the linear motor conveying system comprises the track system and one or more carriers to be guided in the track system. The track modules can be standardized modules, multiple of these modules are to be connected to each other to form the track system. A track module, for example, has or defines at least one conveying path, i.e., a path along which the carrier modules are to be guided and moved. Such track modules can be of different types, e.g., straight modules, curve modules, and switch modules. Such different modules in required numbers can be connected to form a track system according to specific needs. While a straight modules and curve modules typically have one conveying path, a switch module can have one conveying path split into two conveying paths.

A track module comprises a track component and has a conveying path for a carrier module to be received in the respective track module, each of the track modules having two ends and the respective conveying path extending from a first one to a second one of said two ends. For each of the track modules, the respective track component comprises, along at least part of the respective conveying path, a first side part, a second side part and a bottom part, wherein the first side part and the second side part are arranged opposite to each other. In cross section, this can form a U-shape or a similar shape/cross section. The bottom part preferably is configured to be mounted on a baseplate, where the base plate can be mounted on a ground surface or in a different orientation, e.g., vertically or upside-down.

Each of the track modules comprises guiding structures, preferably rods, each configured to act as a bearing surface for a wheel of the carrier module. Such guiding structure might also be called a support structure. For each of the modules, at least two of the guiding structures are arranged at the respective first side part and/or the respective second side part. In an embodiment, three guiding structures are provided at the first side part and/or the second side part, i.e., six guiding structures in total. These guiding structures or rods can be used to guide the carrier modules. The track component can comprise recesses, in which said guiding structures or rods can be assembled.

For each of the track modules, the guiding structures are configured with a free hanging end such that, at the first and/or second one of the two ends, the respective free hanging end is not in contact with the track component. A main part of the guiding structures can basically be provided in the recesses of the track component. In an embodiment, the free hanging ends extend beyond the respective track component, along the conveying path. For the free hanging length, the respective recess for the guiding structure or rod can be somewhat deeper and broader with respect to the remaining part of the track component, (as to allow a free hanging end to be established).

As mentioned, the track system comprises multiple track modules. These are arranged such that a desired conveying path over the multiple track modules is formed. The track modules are arranged next to each other or adjacent to each other; thus, there are one or multiple sets of two adjacent of the multiple track modules, which are arranged next to each other along the conveying path. This arrangement also results in that free hanging ends of the respective guiding structures of the two adjacent track modules are located next to each other; this is preferably in an at least essentially coaxial manner.

The track system further comprises one or multiple connectors, each connector comprising at least two connecting recesses, preferably three connecting recesses. For each of the sets of two adjacent track modules, the free hanging ends of the respective guiding structures at the first side part and/or the second side part are connected to each other by means of the one or at least one of the multiple connectors.

The free hanging end results in a certain flexibility of said guiding structure, and thus at the transition from one to the next track module. Thus, when a wheel of a carrier module passes from one to the next track module, and passes, e.g., a gap between two neighbouring track modules or a potential misalignment, e.g., due to thermal expansion, the forces acting on the wheel and carrier module due to such misalignment are reduced. This allows for thermal expansion of the track modules and guiding structure in movement or conveying direction, and the guiding structure can deal with tolerances in all directions (X, Y and Z-directions).

The connector allows the alignment of multiple guiding structures simultaneously. Such connector can be moved over the transition of the guiding structures, e.g., with a tool. The connector also allows a track module to be installed and/or removed from a track system without having to remove any other track module. For example, a middle one of three track modules arranged in a row can easily be removed along a direction orthogonal to the conveying path. This applies in particular to track modules where the free hanging end extends beyond the track component, along the conveying path.

In an embodiment, the one or at least one of the multiple connectors comprises a lubrication system. The lubrication system has a lubrication input, and it has a lubrication output at at least one of the connecting recesses. Preferably, the lubrication system has a lubrication output at each of the connecting recesses. The lubrication input allows connecting an external lubrication supply. Via internal channels in the connector, a lubricant can be provided from the input to the outputs. The outputs are located in the recesses, i.e., behind the gap or transition of the guiding structure or rods. By applying the lubricant at this location, it can be spread whenever a carrier module (or mover) moves past the transition of two adjacent track modules. By combining the lubrication output with the connector, the highest amount of flexibility can be provided to a customer when building their systems.

In an embodiment, for the one or each of multiple sets of two adjacent track modules, the two adjacent track modules are arranged next to each other, along the conveying path, with a gap in-between. Such gap allows easy insertion of the connectors. In order to further facilitate insertion (and removal), a width of the one or the multiple connectors used for the two adjacent tracking modules, along the conveying path, can be smaller than a width of the gap.

In an embodiment, track connection means are provided, electrically. In an embodiment, at least one channel of free space is formed between the at least one connector (i.e. the connector to connect free hanging ends) and the track connection means, connecting an inside of the track modules to the outside. This in particular applies to one or each set of two adjacent track modules. Such channel can be considered as a trash chute, which is formed by the geometry of the track connection means (i.e. the means to electronically connect two track modules) and the connector (i.e. the connector to connect free hanging ends). This trash chute is an opening from the frame, where pollution that can be built-up in the U-shaped track module, can fall and/or be moved to the outside of the track system. This allows the system to deal with both small and larger particles (e.g., up to 12.5 mm in length, height, and width).

In an embodiment, the at least two guiding structures are made of harder material than the track component. In an embodiment, the track component is made of aluminum. In an embodiment, the guiding structures are made of steel. This allows improving the lifetime of the guiding structures or rods.

The bottom part is preferably oriented either towards the baseplate and/or mounted on the ground surface. Thus, the bottom part can be oriented essentially horizontally, and the first and second side parts can be oriented essentially vertically. The track component can be U-shaped, seen in cross section through the conveying path or a direction of the conveying path, for example (with the first and second side parts the legs of the U).

At least a first one of the at least two bearing surfaces is arranged at the first side part, and at least a second one of the at least two bearing surfaces is arranged at the second side part, such that the at least one first bearing surface and the at least one second bearing surface face each other. The track module can also comprise more than two bearing surfaces, for example, two or three first and two or three second bearing surfaces. This requires more than two guiding structures. The number of bearing surfaces typically should match with the number and/or arrangement of wheels of a carrier module.

In an embodiment, each of the track modules further comprises two electro-magnetic motor components, each preferably comprising one or more electric coils. A first one of the two electro-magnetic motor components is arranged at the first side part, and a second one of the two electro-magnetic motor components is arranged at the second side part, such that the first electro-magnetic motor component and the second electro-magnetic motor component face each other. Preferably, each track module is configured such that the first electro-magnetic motor component matches with a first counterpart electro-magnetic motor component, preferably comprising one or more permanent magnets, of the carrier module, and that the second electro-magnetic motor component matches with a second counterpart electro-magnetic motor component, preferably comprising one or more permanent magnets, of the same carrier module.

Another embodiment of the invention relates to a linear motor conveying system, comprising the track system as described above, and one or more carrier modules to be received and guided in the multiple track modules, to be guided in the track modules. The one or each of the more carrier modules is received or receivable in the one or each of the more track modules, wherein the one or each of the more carrier modules comprises a carrier component and at least two wheels.

In an embodiment, the linear motor conveying system further comprises a controlling system for controlling the linear motor conveying system to move the one or each of the more carriers within the one or more track modules. This can comprise controlling (and powering) the electro-magnetic motor components, e.g., the coils, of the track modules in an appropriate way.

Such carrier module can comprise a carrier component and at least two wheels, e.g., four or six wheels. The carrier module can be configured to be received between a first side component and a second side component of a track module, like the track module described previously. At least a first one of the wheels and at least a second one of the wheels are arranged at the carrier component opposite to each other, such that the at least one first wheel faces the first side component and the at least one second wheel faces the second side component, when the carrier module is received in the track module.

In an embodiment, the carrier module can further comprise two counterpart electro-magnetic motor components. A first one of the two counterpart electro-magnetic motor components and a second one of the two counterpart electro-magnetic motor components are arranged at the carrier component opposite to each other, such that the first counterpart electro-magnetic motor component faces a first electro-magnetic motor component of the track module and the second counterpart electro-magnetic motor component faces a second electro-magnetic motor component of the track module, when received in the track module.

Another embodiment of the invention relates to a method for setting up a track system as described previously. For each one of the multiple sets of two adjacent of the multiple track modules, the two track modules (which are to be connected) are placed next to each other, and are then connected to each other. Further, said two respective free hanging ends are connected to each other, preferably, by means of the one or more of the multiple connectors. Each connector connects multiple rods (guiding structures) on one side of the track modules, which improves the alignment and stiffness of the transition

Another embodiment of the invention relates to a method for replacing a selected track module of a track system as described above. All connectors connected to the selected track module are removed, and the selected track module is moved, along a direction orthogonal to the conveying path, in order to remove the selected track module. A new track module is then moved, along a direction orthogonal to the conveying path, to the former place of the removed selected track module. In particular, the selected track module is a middle one of three track modules, which are arranged along a common conveying path. This means that the selected track module has a neighbouring track module on both ends.

Further advantages and embodiments of the invention result from the description and the attached drawing.

It goes without saying that the features mentioned above and those still to be explained below can be used not only in the combination specified in each case, but also in other combinations or on their own, without departing from the scope of the present invention.

The invention is shown schematically in the drawing using an exemplary embodiment and is described in detail below with reference to the drawing.

### Brief description of the drawing

- Fig. 1: shows a linear motor conveying system for explaining the invention in a perspective view;
- Fig. 2: shows the linear motor conveying system for of Fig. 1 in a different perspective view;
- Fig. 3a: shows a track module and a carrier module according to an embodiment in a perspective view;
- Fig. 3b: shows the track module and the carrier module of Fig. 3a in a cross section;
- Fig. 3c: shows the carrier module of Fig. 3a in a perspective view;
- Fig. 4: shows a track system at the transition between two adjacent track modules according to an embodiment;
- Fig. 5: shows a track system at the transition between two adjacent track modules, with a connecter, according to another embodiment;
- Fig. 6: shows a connector in an embodiment; and
- Fig. 7: shows a connector in another embodiment.

### Detailed description of the drawing

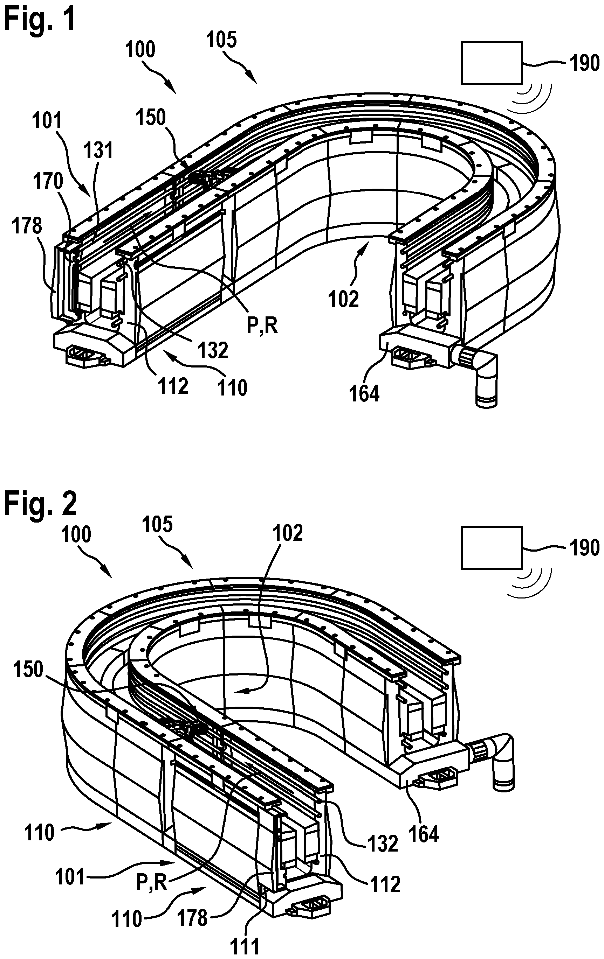

Fig. 1 schematically illustrates a linear motor conveying system 100 in a perspective view. Fig. 2 illustrates the linear motor conveying system 100 of Fig. 1 in a different perspective view. Figs. 1 and 2 will be described together. The linear motor conveying system 100 comprises, by means of example, several track modules. Depending on the needs of a particular application for the linear motor conveying system, different types and numbers of track modules can be provided and also be connected to each other to provide a track system. Types of track modules are, for example, straight modules, curve modules and switch modules.

By means of example, two track modules 101 are straight modules, and module 102 is a curve module. The straight modules 101 are both identical, in the example shown in Figs. 1 and 2. It is noted, however, that straight modules can have a different length, where a length is to be seen in moving or conveying direction along a conveying path P, indicated for a straight module 101 in Figs. 1 and 2.

Different parts or regions of the curve module 102 can have different radii and/or curve shapes. It is noted that the curved track module in Figs. 1 and 2 are only shown schematically, in particular, with regard to the way it is built.

The straight module 101 at the left side in Figs. 1 and 2 will be described in more detail. The track module 101 comprises a track component 110 (a body part), and at least two bearing surfaces 131, 132. By means of example, six bearing surfaces are shown in Figs. 1 and 2, while only two of them are indicated with a reference numeral.

Further, the track component 110 comprises a first side part 111, a second side part 112 and a bottom part (not shown visible in Figs. 1 and 2), wherein the first side part 111 and the second side part 112 are arranged opposite to each other. Bearing surfaces are formed by guiding structures like rods, arranged in or inserted into recesses in the first side part 111 and the second side part 112. By means of example, guiding structures or bearing surfaces 131 and 132 are referred to by reference numerals.

It is noted that this way of how a track module is formed, does not only apply to straight module 101 but also to other types of modules like the curve module 102.

Each of the straight modules and the curve modules shown in Figs. 1 and 2, have a conveying path, although only shown for one straight module 101, from a respective first one to a respective second one of two ends of the straight module 101. When the track modules are connected to each other, the individual conveying paths are also connected to from a combined conveying path, along which the carrier modules are guided and conveyed. Note that carrier modules can be moved or conveyed in both directions of a conveying path, irrespective of the direction of the arrow indicating the conveying path P.

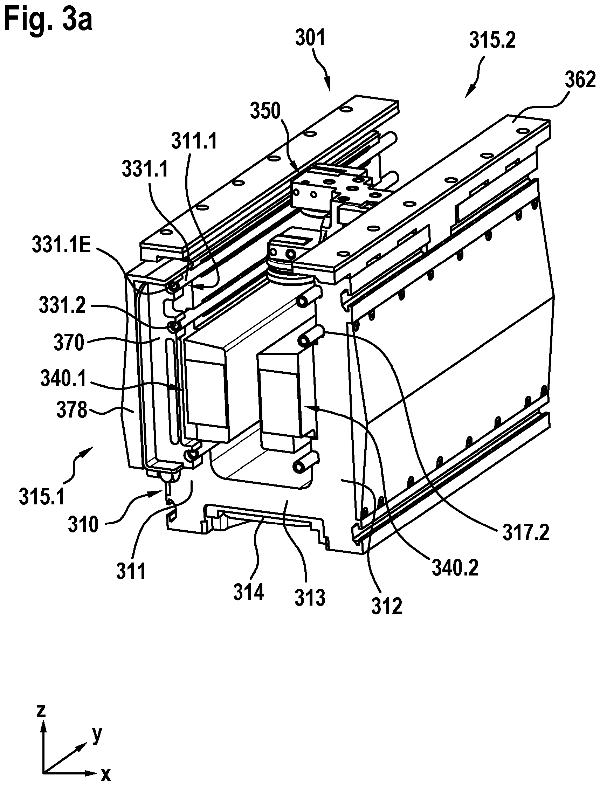

Further, the linear motor conveying system 100 comprises, by means of example, several carrier modules 150. The track module 101 is configured to receive such a carrier module 150 between the first side part 111 and the second side part 112, in particular, such that the at least one first bearing surface 131 matches with at least a first wheel of the carrier module 150, and that the at least one second bearing surface 132 matches with at least a second wheel of the carrier module 150. This is shown in Figs. 1 and 2 but will be illustrated and described in more detail later with respect to Figs. 3a to 3c.

Further, the linear motor conveying system 100 comprises, in an embodiment, a controlling system 190 for controlling the linear motor conveying system 100 to move the carrier modules 150 within the track modules, i.e., in moving or conveying direction R (along path P), indicated in Figs. 1 and 2. It is noted that such conveying direction R is a straight line for straight modules, but it is a curved line for curved modules. For operating the linear motor conveying system 100, by means of the controlling system 190, electro-magnetic motor components, for example, at the track modules, have to be controlled.

Further, connection means 164 are provided to electrically connect adjacent track modules and which allow connecting to an electrical power supply. Further, connectors 170 are shown, which are used to connect the guiding structures and which will be explained in more detail below. Further, covers 178 for the connectors 170 are shown, which can be provided to e.g. protect the connectors and free spaces between the side parts of two adjacent track modules.

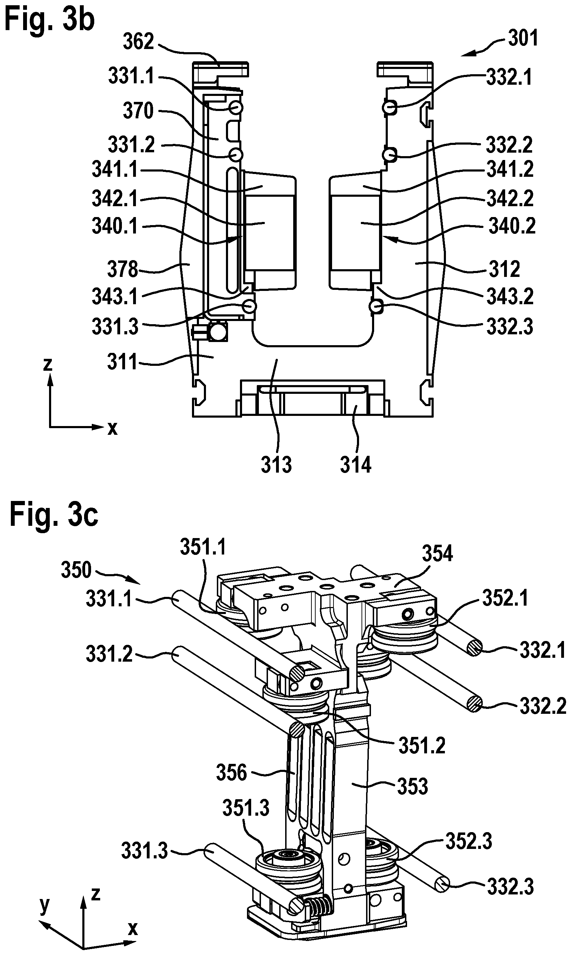

Fig. 3a illustrates a track module 301 and a carrier module 350 in a perspective view. Fig. 3b illustrates the track module 301 of Fig. 3a in a cross section in the x-y-plane, but without the carrier module 350. Fig. 3c illustrates the carrier module 350 of Fig. 3a in a perspective view but without most parts of the track module. Figs. 3a, 3b, 3c shall be described together in the following. It is noted that the axes could also be defined different, e.g., with the conveying direction in the x-direction.

By means of example and for explanation of the basic structure and composition of a track module, track module 301 is a straight module. Track module 301 can, basically, correspond to track module 101 of Figs. 1 and 2, however, showing additional components and, in particular, having specific configurations relating to the guiding structures. The following explanations apply also to other types of track modules.

The track module 301 comprises a track component 310, and, by means of example, six guiding structures, 331.1, 331.2, 331.3, 332.1, 332.2, 332.3, formed as rods, and acting as bearing surfaces. Further, the track component 301 comprises, along a conveying path, a first side part 311, a second side part 312 and a bottom part 313, wherein the first side part 311 and the second side part 313 are arranged opposite to each other. At the bottom part 313, there is provided an electrical interface 314. The conveying path is not denoted in Fig. 3a, but extends along the y-direction, from first end 315.1 of the track module 301 to a second end 315.2 of the track module, and can be similar or equal to conveying path P shown in Figs. 1 and 2.

Three rods (here, e.g., rods 331.1, 331.2, 331.3) are arranged at the first side part 311, and three second rods (here, e.g., rods 332.1, 332.2, 332.3) are arranged at the second side part 312, such that the at first rods 331.1, 331.2, 331.3 and the second rods 332.1, 332.2, 332.3 - or, rather, the bearing surfaces provided by them - face each other, i.e., are oriented towards each other. In other words, all of the bearing surfaces are provided at an inner side of the respective first and second side parts, where the conveying path is formed.

The guiding structures or rods acting as the bearing surfaces are arranged in or inserted into recesses in the first side part 311 and the second side part 312, respectively. By means of example, one such recess is indicated by 317.2 in Fig. 3a.

Further, as indicated in an in the top left of Fig. 3a, the rod 331.1 is configured with a free hanging end 331.1E at the first end 315.1 such that, within a section along the conveying path said free hanging end extends beyond the track component; also, part of the free hanging end may be within the track component, but not in contact with the track component. A free space 311.1 can be provided between the first side part 311 and the rod 331.1. Although only shown for the rod 331.1 at the first end 315.1, the rod 331.1 can also have a free hanging end at the second end 315.2. Similarly, the rod 332.1 can have a free hanging end at the first end 315.1 and also at the second end 315.2. Further, also the other rods 331.2, 331.3 and 332.2, 332.3 can each have two such free hanging ends. Outside the free hanging ends, i.e. along the major part of the track module, the rods are fixed in the track component (or in the recesses).

In an embodiment, the track 301 further comprises two electro-magnetic motor components, a first electro-magnetic motor component 340.1 and a second electro-magnetic motor component 340.2. The first electro-magnetic motor component 340.1 and the second electro-magnetic motor component 340.2 extend along the conveying path (here: in y-direction). The first electro-magnetic motor component 340.1 is arranged at the first side part 311, and the second electro-magnetic motor component 340.2 is arranged at the second side part 312, such that the first electro-magnetic motor component 340.1 and the second electro-magnetic motor 340.2 component face each other.

In an embodiment, the first electro-magnetic motor component 340.1 comprises one or more electric coils 341.1 (actually covered by epoxy in this Fig. but the reference numeral indicates the general position); the number of the electric coils can vary and depend on the specific system. Further, the first electro-magnetic motor component 340.1 can comprise one or more magnetic or ferromagnetic cores 342.1, e.g., made of iron. Further, the first electro-magnetic motor component 340.1 can comprise a holding or fixing structure 343.1 (only schematically illustrated) for fixing the coils and magnetic core to the first side part 311. The first electro-magnetic motor component 340.1 can be fixed to the first side part 311 by means of gluing and/or screwing, for example.

The explanations for the first electro-magnetic motor component 340.1 apply to the second electro-magnetic motor component 340.2 and its components and the like accordingly.

The bottom part 313 can be placed on a ground surface or mounted on a baseplate. Other possibilities are mentioned previously. Such ground surface could be below the bottom part 313, seen in z-direction in Figs. 3a, 3b.

The track module 301 is configured to receive a carrier module 350 between the first side part 311 and the second side part 312 and is, preferably, configured such that the first bearing surfaces provided by rods 332.1, 332.2, 332.3 match with respective first wheels of the carrier module 350, and that the second bearing surfaces provided by rods 332.1, 332.2, 332.3 match with respective second wheels of the carrier module 350.

While Fig. 3ashow the carrier module 350 being received in the track module 301, Fig. 3c shows the carrier module 350 as such. In addition, Fig. 3c shows the six rods 331.1, 331.2, 331.3, 332.1, 332.2, 332.3 acting as the bearing surfaces. The carrier module 350 comprises a carrier component 353 and, by means of example, six wheels, three first wheels 351.1, 351.2, 351.3, and three second wheels 352.1, 352.2, 352.3 (note that wheel 352.2 is only partly visible in Fig. 3c and not explicitly referred to). The carrier module 350 is configured to be received between the first side part 311 and the second side part 312 of the track module 301.

By means of example, three first wheels 351.1, 351.2, 351.3 and the three second wheels 352.1, 352.2, 352.3 are arranged at the carrier component 353 opposite to each other, such that three first wheels 351.1, 351.2, 351.3 face the first side component 311 and the three second wheels 352.1, 352.2, 352.3 face the second side component 312, when received in the track module 301. This can be seen in Figs. 3a, 3b. Each of the wheels 351.1, 351.2, 351.3, 352.1, 352.2, 352.3 matches with a respective one of the six rods 331.1, 331.2, 331.3, 332.1, 332.2, 332.3 or the bearing surfaces provided. This can be seen in Fig. 3c. With respect to the bearing surface and the wheels, matching means that a wheel can be guided by and roll on a respective bearing surface. A bearing surface could, thus, also be called a rolling surface. The wheels, for example, can comprise a groove matching with the bearing surface.

In an embodiment, the carrier module 350 further comprises two counterpart electro-magnetic motor components, a first counterpart electro-magnetic motor component 356 (shown in Fig. 3c) and a second counterpart electro-magnetic motor component (not visible in Fig. 3c). Each of such counterpart electro-magnetic motor component can comprise one or more permanent magnets, for example. The first counterpart electro-magnetic motor component 356 and the second counterpart electro-magnetic motor component 356 are arranged at the carrier component 353 opposite to each other, such that the first counterpart electro-magnetic motor component 356 faces the first electro-magnetic motor component 340.1 of the track module 301 and that the second counterpart electro-magnetic motor component faces the second electro-magnetic motor component 340.2 of the track module 301, when received in the track module 301. This can be seen in Fig. 3a.

The first counterpart electro-magnetic motor component 356 matches with the first electro-magnetic motor component 340.1, i.e., these two components electro-magnetically interact with each other in order to from a linear electro-magnetic motor. This also, typically, requires an air gap of appropriate size between these two components. Similarly, the second counterpart electro-magnetic motor component matches with the second electro-magnetic motor component 340.2, i.e., these two components electro-magnetically interact with each other in order to from a linear electro-magnetic motor. This also, typically, requires an air gap of appropriate size between these two components. Thus, the track module 301 allows receiving a state of levitation of the carrier module 350 between the two side parts of the track module 301.

Figs. 3a and 3b in addition show a connector 370, which can be used to connect adjacent rods of two adjacent track modules. For illustration purposes, there is shown only one connector on one side part of the track module and at one end, whereas the other side part and ends are visible without such connector. In addition, a cover 378 for the connector 370 is shown. A more detail explanation of the connector will be provided below.

Note that sensing elements 362 are shown on top of the track module, which however, are not of particular relevance for the present invention.

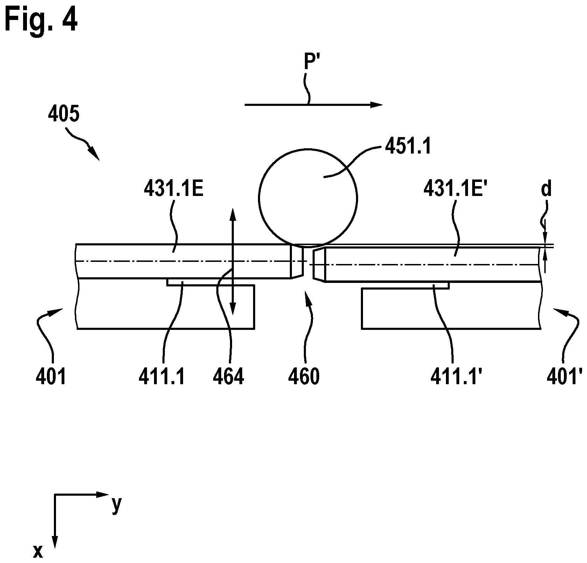

Fig. 4 schematically illustrates a track system 405 according to an embodiment. The track system 405 comprises multiple track modules, parts of two of which are shown, a track module 401 and a track module 401'. Each of track module 401 and 401' can correspond to track module 301, for example. The two track modules 401, 401' are arranged next to each other along the conveying path, with a gap 460 in-between, and such that the respective conveying paths from a combined conveying path P'.

For track module 401 the free hanging end 431.1E and a corresponding recess 411.1 are shown, and for track module 401' the free hanging end 431.1E' and a corresponding recess 411.1' are shown. The two free hanging ends 431.1E and 431.1E' face each other or are arranged next to each other, in an at least essentially coaxial manner. Each of the two free hanging ends 431.1E and 431.1E' can be flexible, illustrated by a double arrow 464.

Further, a slight misalignment of the two free hanging ends 431.1E and 431.1E' or the respective rods is shown in that track module 401' is shifted with respect to track module 401 by a distance d. It is noted that such misalignment or offset can occur in any direction lateral to the conveying path. Any shift along the conveying path direction can be accounted for by the gap 460. Reasons for misalignment are tolerances in position, manufacturing and assembly. Thermal expansion can also cause tolerances, which will primarily act in the y direction (within Fig. 4) and less in the x and z direction.

In addition, a wheel 451.1 of a carrier module, guided along the combined conveying path P' and passing the gap is illustrated. Due to the flexibility of the two free hanging ends 431.1E and 431.1E', any force acting on the wheel when passing the gap is reduced.

Such free hanging ends arranged next to each other as shown in Fig. 4 can be connected to each other by means of a connector which will be explained in more detail below. This will help reduce or overcome any problems with such tolerances as shown in Fig. 4.

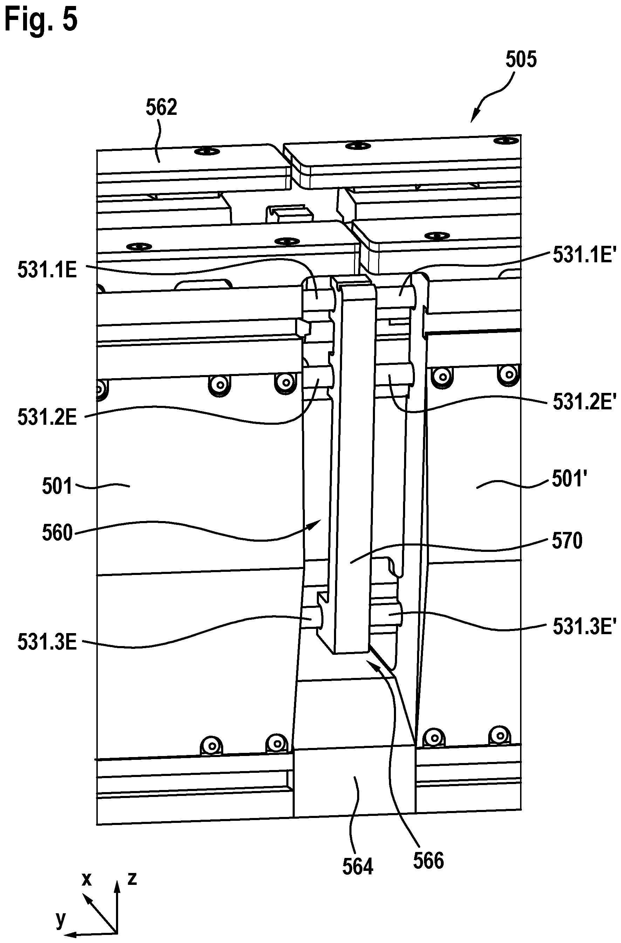

Fig. 5 schematically illustrates a track system 505 according to an embodiment. The track system 505 comprises two track modules 501, 501', which basically can correspond to the track modules shown in Fig. 4. Similarly, a gap 560 between the two track modules is shown. Further, free hanging ends 531.1E, 531.2E and 531.3E of the track module 501, and free hanging ends 531.1E', 531.2E' and 531.3E' of the track module 501' are shown, where the latter three oppose the first three, respectively.

In addition, a connector 570 is provided, which is used to connect the free hanging ends 531.1E, 531.2E and 531.3E of the track module 501 and the free hanging ends 531.1E', 531.2E' and 531.3E' of the track module 501', respectively. As can be seen, the width of the connector 570, along the conveying path (here in y-direction), is smaller than a width of the gap 560. This allows easy assembly and removal of the connector.

Further, track connection means 564 are shown, by means of which the track modules 501 and 501' are connected to each other electrically. There is provided a channel 566 of free space that is formed between the connector 570 and the track connection means 564, connecting an inside of the track modules to the outside. This allows dust and the like be moved to the outside.

Note that sensing elements 562 are shown on top of the track modules, which however, are not of particular relevance for the present invention.

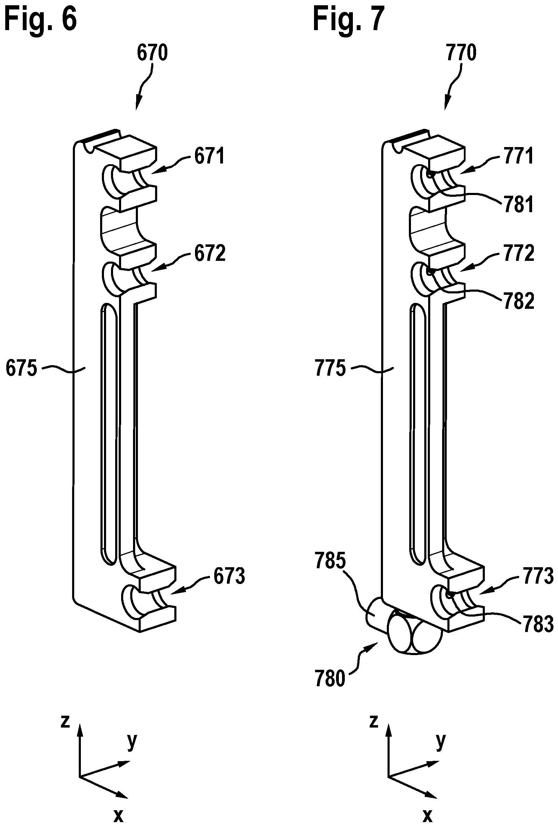

Fig. 6 schematically illustrates a connector 670 in an embodiment. The connector 670 can correspond to connector 570 of Fig. 5 but is shown in a different view (see coordinate axes for reference). The connector 670 comprises a connector body 675, which basically extends along the z-axis or the height direction of the track modules. The connector 670 further comprises, by means of example, three connecting recesses 671, 672, 673 which are provided in the connector body 675.

The connecting recesses are configured such that they can match with the respective free hanging ends of two adjacent track modules, arranged next to each other. Such connector 670 can be provided to the free hanging ends, e.g. by means of a tool, into the gap between the two track modules and fitting over the free hanging ends of the rods.

Once such connector has been provided, the guiding structures or rods - or the free hanging ends thereof, respectively - are fixed with respect to each other. Also, the free hanging ends of the guiding structures or rods will be fixed with respect to free hanging ends of the other guiding structures or rods of the same track modules at the same side part (first or second side part).

Fig. 7 schematically illustrates a connector 770 in another embodiment. The connector 770 can correspond to connector 570 of Fig. 5 or connector 670 of Fig. 6. The connector 770 comprises a connector body 775, which basically extends along the z-axis or the height direction of the track modules. The connector 770 further comprises, by means of example, three connecting recesses 771, 772, 773 which are provided in the connector body 775.

Different to connector 670, the connector 770 comprises a lubrication system 780 that has a lubrication input 785 and three lubrication outputs 781, 782, 783, one at each of the connecting recesses 771, 772, 773. The lubrication system can have internal channels by means of which lubricant can be provided from the input to the outputs.

Each lubrication output is provided in the respective connecting recess such that lubricant is provided to the wheels of the carrier modules and the guiding structure (rods). This allows for the lubrication to be applied at the track module transition, where it will be spread out by the wheels of the carrier modules whenever it passes by. The lubrication, for example oil, is provided from the connector (or track system) to the carrier module or its wheels; this can happen through a slight gap which will typically be present between the two adjacent rods..

From the above it can also be seen, how the track system can be set up and how a track module can be replaced. For setting up, the two track modules are placed next to each other, as shown in Fig. 4 or 5, for example. The respective free hanging ends of the two track modules are connected to each other by means of one or more of the connectors, as can be seen in Fig. 5. Note that per transition between two track modules, two connectors can be used.

For replacing a selected track module, all connectors connected to the selected track module are removed, e.g. by means of a tool. Then, the selected track module can be moved, along a direction orthogonal to the conveying path, in order to remove the selected track module. In Fig. 5, for example, a direction of moving can be along the x-direction and/or the z-direction. Then, a new track module can be moved, along a direction orthogonal to the conveying path, to the former place of the removed selected track module. Further, connectors can be connected to the selected track module (and the neighbouring ones) so as to fix the free hanging ends against each other.

## Claims

1. A track system (405, 505) for a linear motor conveying system, the track system comprising multiple track modules connected to each other,
wherein each of the track modules comprises a track component and has a conveying path for a carrier module to be received in the respective track module, each of the track modules having two ends and the respective conveying path extending from a first one (315.1) to a second one (315.2) of said two ends,
wherein, for each of the track modules, the respective track component comprises, along at least part of the respective conveying path, a first side part (311), a second side part (312) and a bottom part (313), wherein the first side part and the second side part are arranged opposite to each other,
wherein each of the track modules comprises guiding structures (331.1, 331.2, 331.3, 332.1, 332.2, 332.3), preferably rods, each configured to act as a bearing surface for a wheel of the carrier module,
wherein, for each of the modules, at least two of the guiding structures are arranged at the respective first side part and/or the respective second side part,
wherein, for each of the track modules, the guiding structures (331.1, 331.2, 331.3, 332.1, 332.2, 332.3) are configured with a free hanging (331.1E, 431.1E, 431.1E' 531.1 E, 531.1 E') end such that, at the first and/or second one of the two ends, the respective free hanging end is not in contact with the track component,
wherein the track system further comprises one or multiple connectors, each connector (570, 670, 770) comprising at least two connecting recesses,
wherein, for one or each of multiple sets of two adjacent of the multiple track modules, which are arranged next to each other along the conveying path, such that free hanging ends of the respective guiding structures are located next to each other, the free hanging ends of the respective guiding structures at the first side part and/or the second side part are connected to each other by means of the one or at least one of the multiple connectors.

2. The track system (405, 505) of claim 1, wherein, each of the track modules comprises three guiding structures at the first side part and/or the second side part, and wherein each connector comprises three connecting recesses (6701, 672, 673, 771, 772, 773).

3. The track system (405, 505) of claim 1 or 2, wherein the one or at least one of the multiple connectors comprises a lubrication system (680) having a lubrication input (785) and a lubrication output (781, 782, 783) at at least one of the connecting recesses.

4. The track system (405, 505) of any one of the preceding claims, wherein the free hanging ends extend beyond the respective track component (310), along the conveying path.

5. The track system (405, 505) of any one of the preceding claims, wherein, for the one or each of multiple sets, the two adjacent track modules are arranged next to each other, along the conveying path, with a gap (460) in-between and such that the respective conveying paths form a combined conveying path.

6. The track system (405, 505) of claim 5, wherein a width of the one or the multiple connectors used for the two adjacent tracking modules, along the conveying path, is smaller than a width of the gap.

7. The track system (405, 505) of claim 5 or 6, further comprising track connection means (564), by means of which the two adjacent track modules are connected to each other electrically.

8. The track system (405, 505) of claim 7, wherein at least one channel (566) of free space is formed between the at least one connector (570) and the track connection means (564), connecting an inside of the track modules to the outside.

9. A linear motor conveying system (100), comprising the track system (405, 505) of any one of the preceding claims, and one or more carrier modules (150, 350) to be guided in the multiple track modules, wherein the one or each of the more carrier modules is received or receivable in the each of the more track modules, wherein the one or each of the more carrier modules comprises a carrier component and at least two wheels.

10. A method for setting up the track system of any one of the preceding claims, comprising the following steps, for the one or each of the multiple sets of two adjacent of the multiple track modules:
- Placing, the two track modules next to each other, and
- Connecting the respective free hanging ends of the two track modules to each other by means of the one or more of the multiple connectors.

11. A method for replacing a selected track module of the track system of any one of claims 1 to 9, comprising the following steps
- Removing all connectors connected to the selected track module,
- Moving the selected track module, along a direction orthogonal to the conveying path, in order to remove the selected track module; and
- Moving a new track module, along a direction orthogonal to the conveying path, to the former place of the removed selected track module.

12. The method of claim 11, comprising at three track modules, arranged along a common conveying path, wherein the selected track module is a middle one of the three track modules.
